# EUROPEAN PATENT APPLICATION

(11) **EP 2 085 200 A1**
(43) Date of publication of application: **05.08.2009**
(21) Application number: 07832317.7
(22) Date of filing: 21.11.2007
(51) Int. Cl.: B29C 35/02, B29C 33/02, B29D 30/54, B29L 30/00

(54) **METHOD FOR MANUFACTURING RETREATED TIRE**

(30) Priority: 29.11.2006 JP 2006322119
(71) Applicant: Bridgestone Corporation, Tokyo 104-8340 (JP)
(72) Inventor: NAKAJIMA, Yohei, Kodaira-shi Tokyo 187-8531 (JP)
(74) Representative: Whalley, Kevin
(86) International application number: PCT/JP2007/072587
(87) International publication number: WO 2008/065951

(57) **Abstract**

A method of producing a retreaded tire capable of simplifying the process is proposed.

A tire casing 2 provided with a tread rubber is put into a bag 3 made of a resin film and air remaining inside the bag 3 is evacuated to perform a sealing operation.

## Description

### TECHNICAL FIELD

The present invention relates to a method of producing a retreaded tire, and particularly aims to simplify steps of retreading a tire to realize an efficient production.

### RELATED ART

When a used tire is subjected to a retreading process, a process comprising the following steps is common: a tread rubber is removed from a surface of a tire to obtain a tire casing; a unvulcanized cushion rubber layer is arranged on an outer surface of the tire casing; a new tread rubber is applied on the cushion rubber layer; the tire is covered with a pouched body such a rubber tube, which is a so-called envelop, closely similar to a shape of the tire and then is placed in a vulcanizer to be vulcanized.

The above-mentioned retreading method of a tire is also referred to as a cold retread vulcanize process because an already-vulcanized tread rubber is used and thus the method need only an amount of heat just enough for the vulcanization of the cushion rubber layer (the vulcanization temperature is about 120-130 deg C). It has been considered that this method has an advantage that a vulcanization mold is not necessary and, beside that, is suitable for retreading tires of wide variety of kinds and brands in small quantities.

The conventional retreading method which uses an envelope, however, still has the following drawbacks, which has to be improved.

That is, there are two types of envelops: one is a double envelop having outer and inner envelops which are arranged on the outer and the surface, respectively, of the tire; and the other is a rim-type envelop using a rim. The double envelop needs a horizontal or vertical expander or expansion device for attaching and detaching the outer envelop and a reversing station for attaching and detaching the inner envelop. Meanwhile, the rim envelope needs not only a horizontal or vertical expander like the above-mentioned double envelop but also a lot of rims corresponding to tire sizes. In any cases, extra spaces for installing devices and apparatus are necessary to be assured. Further, the expander is, in fact, manually attached and detached manually, so that manpower necessary for this operation is inevitably increased.

### DISCLOSURE OF THE INVENTION

It is an object of the present invention to propose a novel method which can simplify steps and realize an effective production.

The present invention relates to a method of producing a retreaded tire comprising: providing a tread rubber on a tire casing; and then heat-treating them to vulcanize-bond said tread rubber to the tire casing, wherein the tire casing provided with the tread rubber is put into a bag consisting of a resin film and air remaining inside the bag is evacuated to perform a sealing operation.

In the method mentioned in above, after the tire casing provided with the tread rubber is put into the bag, annular bead seal rings are preferably mounted on both bead portions of the tire casing from outside of the bag and then air remaining inside the bag is evacuated to perform the sealing operation.

Further, a through-hole extending through the bag is preferably provided in a region surrounded by at least one of the bead seal rings before or after the bead seal rings are mounted on both bead portions of the tire casing from outside of the bag.

Moreover, the resin film preferably has a melting point of 120 deg C or more, and specifically polypropylene, poliamide, nylon or the like are applicable.

In order to vulcanize the retreaded tire without an envelope, the followings are essential requirements: it must be tolerant of a heat (100 deg C) from a heater; side faces of the tire (end portions of a precure tread) can be pressed by surface as flat as possible; the shape is flexible for fitting to the outer contour of the tire; and an air layer can be formed in a groove portion of the end portion of the precure tread to stabilize a sectional shape of the groove portion (an air layer is ordinary secured by applying a wicking sheet, which is a sheet made of fabric or rubber and which ensures a communication of the air between the tire and the envelope, on the tire). A bag made of resin film is particularly advantageous for fulfill these requirements. This can eliminate operations using an expander or a turn table, and makes it sufficient for satisfying the requirements to put a shaped tire (a tire casing provided with a tread rubber) into a bag and evacuate (vacuum) air remaining inside the bag.

Among others, a bag made of a polypropylene film is good in a point that it is tolerant of hot water and microwave but has some difficulties in applying on an uneven profile having an acute angle. A problem is, however, never raised from the unevenness found in the side face of the tire or the change in the shape of the outer profile of the tire. The thickness of the film is preferably 0.1 mm or less in order to fit the bag to the shape of the tire during the vacuum operation.

### BRIEF DESCRIPTION OF THE DRAWINGS

Fig. 1 is a schematic view of a shaped tire to be vulcanized according to the present invention.
Fig. 2 is a perspective view illustrating a condition that the shaped tire is put into a bag.
Fig. 3(a) is a perspective view illustrating a condition that bead seal rings are about to be mounted on both bead portions of the shaped tire via the bag, and Fig 3(b) is a sectional view in the tire width direction of the same.
Fig. 4(a) is a perspective view illustrating a condition that bead seal rings have been mounted on both bead portions of the shaped tire via the bag, and Fig 4(b) is a sectional view in the tire width direction of the same.
Fig. 5(a) is a perspective view illustrating a condition that a mouth of the bag is closed and sealed, and Fig. 5(b) is a schematic view of a condition that the shaped tires together with the bags are about to be installed in the heater.
Fig. 6 is a schematic view of a condition that the mouth of the bag has been pressure bonded.
Fig. 7 is a perspective view illustrating another bag applicable for the method of producing a retread tire according to the present invention.

### DESCRIPTION OF THE SYMBOLS

- 1: heater
- 2: shaped tire
- 3: bag
- 4: vacuum path
- 5: bead seal ring

### BEST MODE FOR CARRYING OUT THE INVENTION

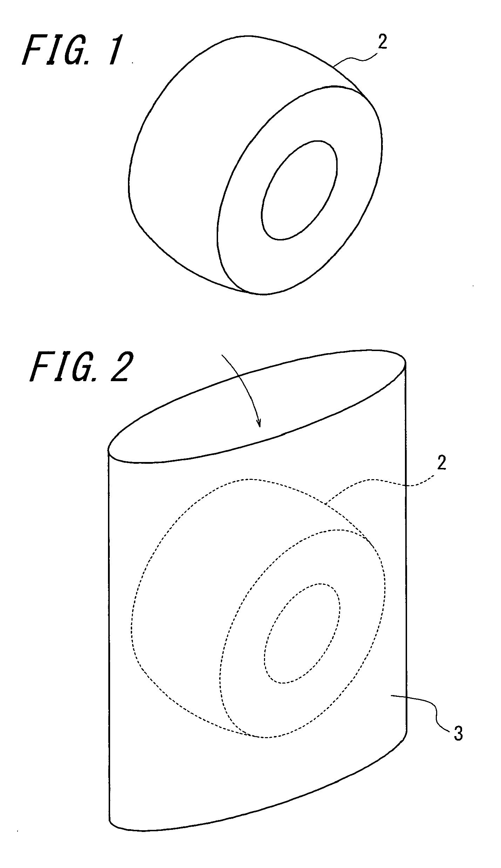

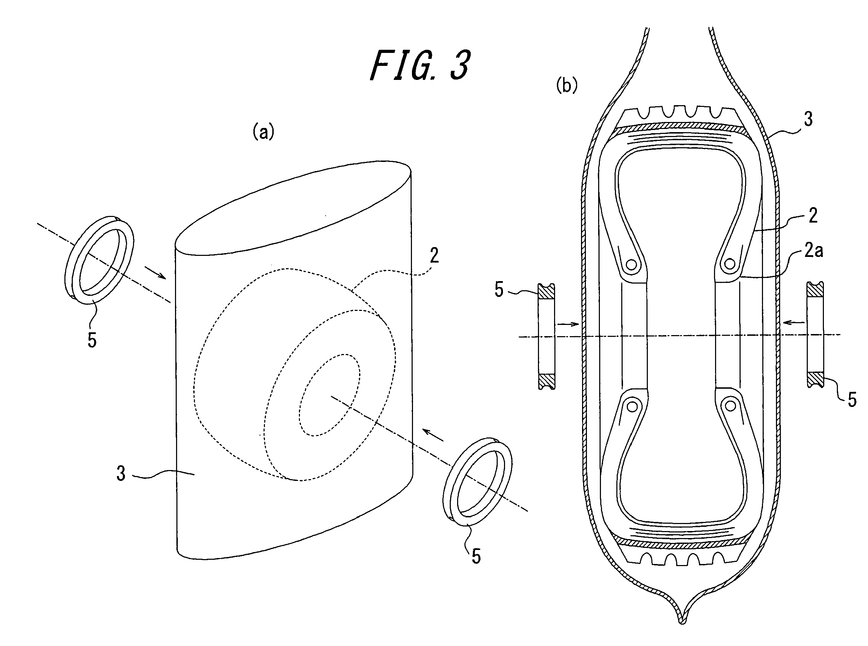

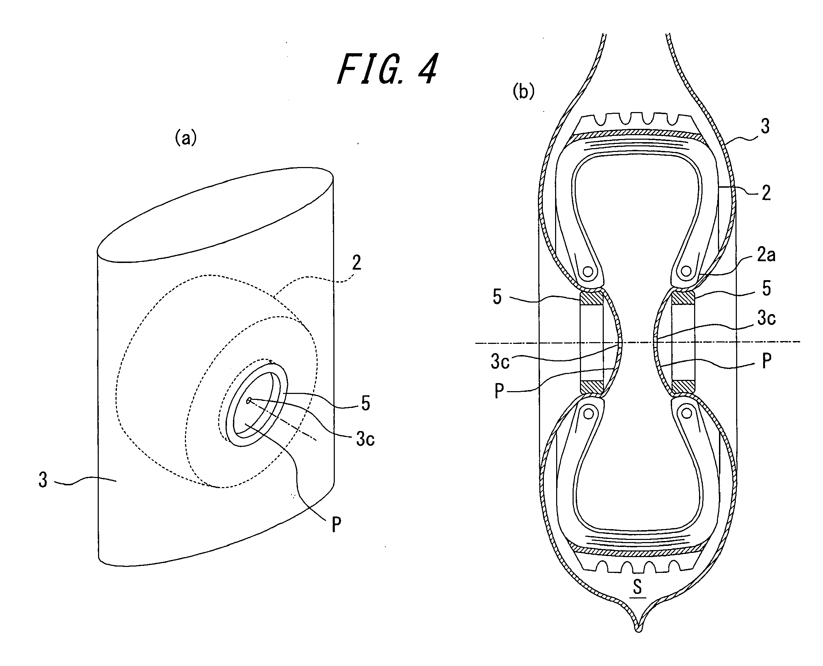

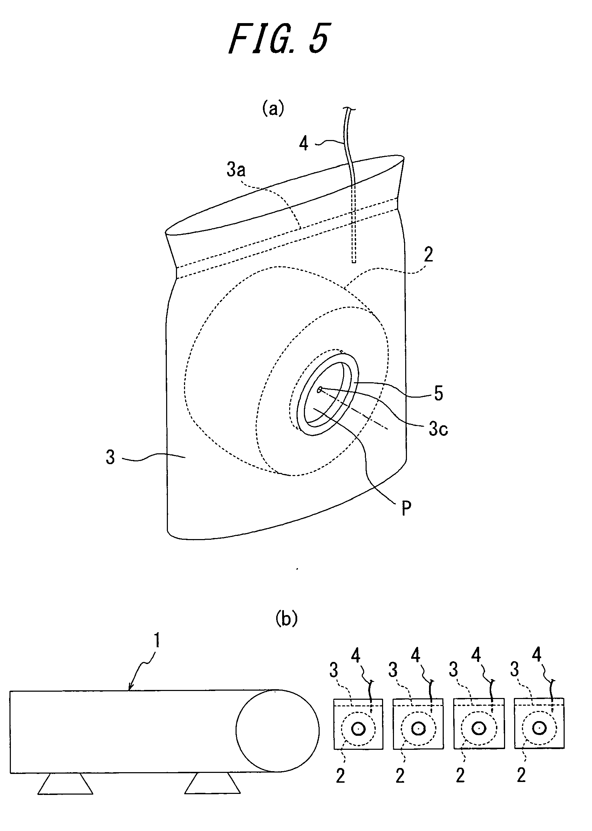

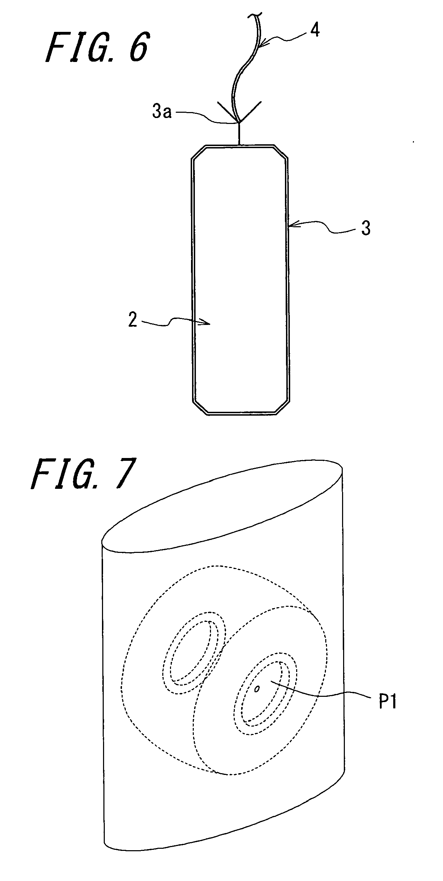

Figs. 1-5 illustrate a procedure of vulcanizing a retreaded tire according to the present invention. In order to vulcanize a retreaded tire according to the present invention, a shaped tire 2 shown in Fig. 1 is put into a bag 3 made of a polypropylene film shown in Fig. 1 prior to a heat treatment (vulcanization) in a heater 1. The film preferably has a melting point of 120 deg C or more to be tolerant of the temperature during a vulcanization operation. Then, as shown in Fig. 3, annular bead seal rings 5 which prevent a deformation of the shaped tire 2 are engaged with and mounted on both bead portions 2a of the shaped tire 2 via the bag 3 made of a polypropylene film from outside of the bag 3. Thereafter, as shown in Fig. 4, a through-hole 3c extending through the bag 3 is provided in a region P surrounded by the bead seal ring 5. It is noted that the through-hole 3 may be provided in respective regions P surrounded by both bead seal rings 5 or may be provided in a region P surrounded by either one of the bead seal rings 5. As shown in Figs. 5(a) and 6, a mouth 3a of the bag 3 is closed and sealed by, for example, pressure bonding or fusion bonding. The shaped tires 2 together with the bags 3 are installed in the heater 1, as shown in Fig. 5(b), and air remaining in the bags 3 are evacuated via, for example, a vacuum path 4 (such as a vacuum valve). In this state, a seal is achieved between the bag 3 and the shaped tire 2 by the bead seal rings 5, so that it is possible to evacuate only air existing in a space S (see Fig. 4(b)) formed between the bag 3 and the shaped tire 2. Then, the shaped tire 2 is subjected to a heat treatment under a desired condition. After the heat treatment, the bag 3 is severed to remove the tire therefrom.

It is noted that a sequence of the sealing of the mouth 3a of the bag 3 and the evacuation of the residual air in the bag via the vacuum path 4 is not limited to the above-mentioned example, but the mouth 3a of the bag 3 may be closed and sealed by pressure bonding or fusion bonding after the air remaining in the bag 3 is evacuated via the vacuum path 4, as shown in Fig. 6.

Further, in the above-mentioned example, the bead seal rings 5 are engaged with and mounted on the both bead portions 2a of the shaped tire 2 from outside of the bag 3 and then the through-hole 3c extending through the bag 3 is provided in the region P surrounded by the bead seal ring 5. However, the through-hole 3c may be formed prior to inserting the shaped tire 2 into the bag 3 or it may be formed after inserting the shaped tire 2 into the bag 3 but prior to engaging the bead seal rings 5 with the both bead portions 2a of the shaped tire 2. In this case, the through-hole 3c needs to be preliminarily formed in a region P1 which is supposed to be surrounded by the bead ring 5 when the bead seal ring 5 is mounted on the bead portion 2a of the shaped tire 2 via the bag 3, as shown in Fig. 7.

Vulcanizing the retreaded tire according to the above-mentioned procedure enables to eliminate a step necessary for attaching and detaching an envelope and to fully automate the process to realize an efficient production of a retreaded tire.

The used bag 3 is not reusable since it was heated during the vulcanization step, but it can be recycled as a bag to promote efficient resource utilization.

Furthermore, the shaped tire 2 is put into the bag 3 and thereafter the annular bead seal rings 5 are mounted on both of the bead portions 2a of the shaped tire 2 from outside of the bag 3, so that the shaped tire 2 is prevented from being deformed during the vulcanization process.

Moreover, the through-hole extending through the bag is provided in the region P of the bag 3 surrounded by the bead seal rings 5, so that a pressure difference does not occur between the interior of the shaped tire and the interior of the heater during the vulcanization process, which further prevents the shaped tire 2 from being deformed during the vulcanization process.

### EXAMPLE

A tread rubber was applied onto a tire casing to form a shaped tire (cold retreading), and the shaped tire was loaded in a bag made of a polypropylene film with a size of 1.7 m x 1.7 m. Residual air in the bag was evacuated and the bag was sealed. Then, the shaped tire and the bag were subjected to a vulcanization process. It was proven that a time necessary for producing a retreaded tire can be shortened and the quality of the retreaded tire is not different from that of the conventional tire at all.

### INDUSTRIAL APPLICABILITY

The present invention can provide a producing method which enables an efficient production by simplifying the process.

## Claims

1. A method of producing a retreaded tire comprising: providing a tread rubber on a tire casing; and then heat-treating them to vulcanize-bond said tread rubber to the tire casing, wherein the tire casing provided with the tread rubber is put into a bag consisting of a resin film and air remaining inside the bag is evacuated to perform a sealing operation.

2. The method of producing a retreaded tire according to claim 1, wherein after the tire casing provided with the tread rubber is put into the bag, annular bead seal rings are mounted on both bead portions of the tire casing from outside of the bag and then air remaining inside the bag is evacuated to perform the sealing operation.

3. The method of producing a retreaded tire according to claim 1 or 2, wherein a through-hole extending through the bag is provided in a region surrounded by at least one of the bead seal rings before or after the bead seal rings are mounted on both bead portions of the tire casing from outside of the bag.

4. The method of producing a retreaded tire according to according to any one of claims 1-3, wherein the resin film has a melting point of 120 deg C or more.
